# EUROPEAN PATENT SPECIFICATION

(11) **EP 2 012 507 B1**
(45) Date of publication and mention of the grant of the patent: **10.03.2010**
(21) Application number: 08167636.3
(22) Date of filing: 29.04.2005
(51) Int. Cl.: H04M 1/02

(54) **Asymetric handheld electronic device**
Asymmetrisches tragbares elektronisches Gerät
Appareil électronique portable asymétrique

(43) Date of publication of application: 07.01.2009
(62) Divisional of application: 05252710.8
(73) Proprietor: Research In Motion Limited, Waterloo, Ontario N2L 3W8 (CA)
(72) Inventor: Rak, Roman, Waterloo, Ontario N2T 2V8 (CA); Tyneski, Frank, Kitchener, Ontario N2H 3B3 (CA)
(74) Representative: Howson, Richard G.B.

(56) References cited:
- WO-A-2005/006718
- ANONYMOUS: "Nokia N-GAGE QD User's Guide" [Online] December 2004 (2004-12), NOKIA , XP002346250 Retrieved from the Internet: URL:http://www.n-gage.com/en-R1/support/NG ageQD/userguides.htm> [retrieved on 2005-09-22] * page 12 *
- ANONYMOUS: "Nokia 3300 User Guide" [Online] June 2003 (2003-06), NOKIA , XP002346249 Retrieved from the Internet: URL:http://nds2.nokia.com/files/support/na m/phones/guides/3300_US_en.PDF> [retrieved on 2005-09-22] * pages 15-16 *

## Description

### BACKGROUND OF THE INVENTION

### Field of the Invention

The invention relates generally to handheld electronic devices and, more particularly, to a handheld electronic device having an symmetric layout.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature a wireless or other communication capability, although other handheld electronic devices are stand-alone devices that are functional without communication with other devices. Such handheld electronic devices are generally intended to be portable, and thus are of a relatively compact configuration. With advances in technology, handheld electronic devices are built to have progressively smaller form factors yet have progressively greater numbers of applications and features resident thereon.

Some handheld electronic devices, such as those that may include a wireless communication capability, also include a microphone and an earphone disposed on a case of the handheld electronic device. The handheld electronic device can be held against the user's ear with the microphone disposed near the mouth such that the handheld electronic device can be operated as a telephone. While such handheld electronic devices have been generally effective for their intended purposes, such handheld electronic devices have not, however, been without limitation.

Handheld electronic devices having a built in earphone typically have the earphone disposed generally centrally on the handheld electronic device along an upper edge of a front surface thereof. While such a central positioning of the earphone provides to the handheld electronic device a symmetric appearance, such positioning of the earphone can have limitations. Depending upon the size of the device, the earphone can be difficult to position directly over the ear since the position of the earphone may not be readily apparent to a user when the handheld electronic device is disposed at the side of a person's head. Additionally, positioning the device such that a front surface thereof, such as at which the carphone would be disposed, is placed against the entire outer ear can become uncomfortable for the user. It thus would be desirable to provide an improved handheld electronic device that overcomes these and other limitations.

WO-Al-2005/006718 discloses a casing for a handheld device providing a face for providing an input region having defined viewing and audio axes. The casing provides speaker and microphone outlets spaced along the audio axis. The audio axis is aligned with a greatest span of the face.

### SUMMARY OF THE INVENTION

An improved handheld electronic device includes a case having an asymmetry provided by an outwardly protruding corner. The handheld electronic device includes an earphone disposed at the outwardly protruding corner. The positioning or the carphone allows a user to rapidly locate the carphone with respect to the user's car. Additionally, by positioning the earphone at a protruding corner of the handheld electronic device, the protruding corner can be received in an inner portion of the user's outer car, which is relatively more comfortable to the user than positioning the handheld electronic device atop the outer car. The carphone is offset from a main axis of the handheld electronic device in a direction generally toward a side of the handheld electronic device on which the outwardly protruding corner is disposed. In a second embodiment, a display of the handheld electronic device is offset from a main axis thereof in a second direction away from the offset of the earphone.

Accordingly, an aspect of the invention is to provide an improved handheld electronic device having an earphone that is disposed on a case of the device and that is relatively comfortable for a user to use.

Another aspect of the invention is to provide an improved handheld electronic device having an earphone positioned on the case such that it is relatively easy for a user to locate the earphone with respect to the user's ear.

Another aspect of the invention is to provide an improved handheld electronic device having an asymmetry provided by an outwardly protruding corner, and to additionally provide an earphone on the outwardly protruding corner.

Another aspect of the invention is to provide an improved handheld electronic device having an outwardly protruding corner that includes an apex that is at least partially rounded and a pair or legs extending away from the apex, with the legs being oriented at an angle of at most about 90 ° with respect to one another, and possibly at an acute angle with respect to one another.

Accordingly, an aspect of the invention is to provide an improved handheld electronic device, the general nature of which can be stated as including a case, an input apparatus, and an output apparatus. The output apparatus includes an audio transducer and a display disposed on the case. The case has a front surface, and the input apparatus comprises a keypad having a plurality of keys arranged on the front surface of the case in a number of rows and columns with respect to a main axis of the case. The main axis is disposed generally centrally on the case, extends across the display, and is one of i) disposed substantially centrally along a column of keys and ii) disposed substantially between two adjacent columns of keys. The case is formed to have an outwardly protruding corner at a first side of the main axis that provides to the case an asymmetry with respect to the main axis.

### BRIEF DESCRIPTION OF THE DRAWINGS

A further understanding of the invention can be gained from the following Description of the Preferred Embodiments when read in conjunction with the accompanying drawings in which:

Fig. 1 is a front elevational view of an improved handheld electronic device in accordance with a first embodiment of the invention; and

Fig. 2 is a front elevational view of an improved handheld electronic device in accordance with a second embodiment of the invention.

Similar numerals refer to similar parts throughout the specification.

### DESCRIPTION OF THE PREFERRED EMBODIMENTS

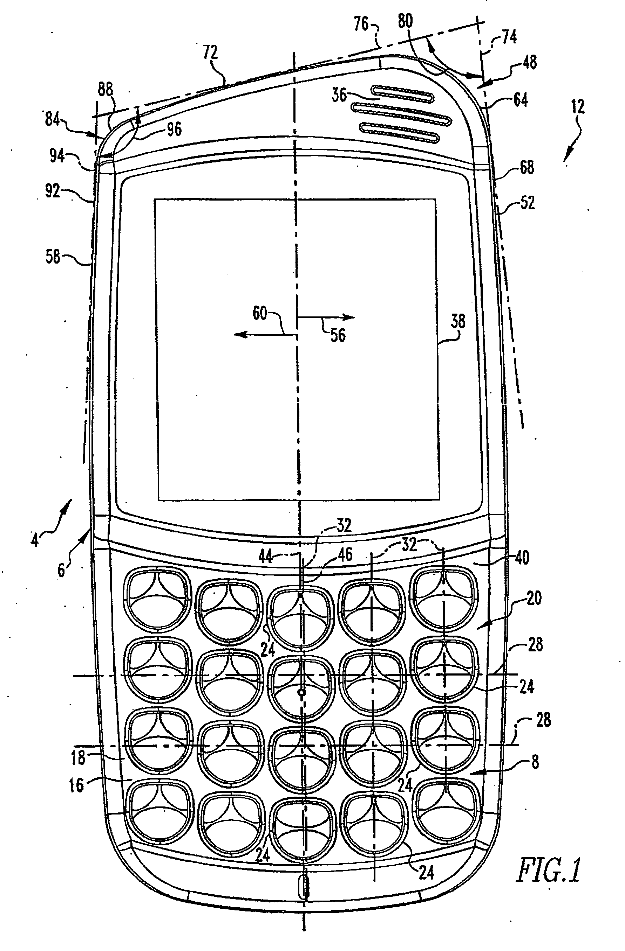

An improved handheld electronic device 4 in accordance with the invention is indicated generally in Fig. 1. The handheld electronic device 4 includes a case 6 upon which are disposed are an input apparatus 8, an output apparatus 12, a processor apparatus 16, and a wireless communication apparatus 18. In other embodiments, the handheld electronic device 4 may be configured to not include the processor apparatus 16 and/or the wireless communication apparatus 18 without departing from the concept of the invention. As will be set forth in greater detail below, the case 6 is configured to include an asymmetry which makes the handheld electronic device 4 more comfortable and easier to use.

The input apparatus 8 includes a keypad 20 having a plurality of keys 24 that are arranged on the case 16 in a number of rows 28 and columns 32. Numerous arrangements of the keys 24 are possible, and the layout depicted herein is purely exemplary.

The output apparatus 12 includes an audio transducer 36 that, in the present exemplary embodiment, operates in the fashion of an earphone. The audio transducer 36 itself is, in the present exemplary embodiment, disposed within an interior of the case 6 and is indicated by a grille formed in the case 6 at the location of the audio transducer 36. The output apparatus 12 additionally includes a display 36 disposed on the case 6. The output apparatus 12 can include other output devices such as lights and the like without departing from the concept of the invention.

The processor apparatus 16 in the depicted exemplary embodiment includes a processor and a memory. The processor may be, for example and without limitation, a microprocessor (µP) or other processor. The memory may be any of a wide variety of storage devices such as, for example and without limitation, RAM, ROM, EPROM, EEPROM, and/or other storage devices. The memory may have one or more applications and/or routines stored therein that are executable on the processor.

The wireless communication apparatus 18 can provide, for example, GSM, GPRS, Bluetooth, Wi-Fi, and/or other wireless communication capability without limitation. An exemplary use of the wireless communication apparatus 18 may be in the context of a telephone application on the handheld electronic device 4, although numerous other types of communication contexts are possible without departing from the concept of the invention.

The case 6 includes a front surface 40 on which the keys 24 are disposed and generally at which the display 38 is disposed. The case 6 also includes a main axis 44 extending generally centrally and longitudinally along the case 6. In the exemplary embodiment depicted herein, the main axis 44 is disposed substantially centrally along a central column 46 of the keys 24 from among the plurality of columns 32. It is noted that the dot-dash line used to indicate the central column 46 is spaced slightly from the main axis 44 for purposes of clarity. In the present exemplary embodiment, the axis 44 also extends across the display 38. It is noted that in other embodiments of the invention, such as might include an even quantity of columns of keys, for example, might have a main axis that is disposed substantially between a pair of adjacent columns of keys.

In accordance with the invention, the case 6 includes an outwardly protruding corner 48 that is disposed at a first side 52 of the case 6 and that provides to case 6 an asymmetry. That is, the case 6 generally is symmetric about the main axis 44 except for the upper regions of the case 6, i.e., from the perspective of Fig. 1, wherein the outwardly protruding corner 48 is a protrusion of the case 6 in a direction generally parallel with the main axis 44. The case 6 also includes a second corner 84 adjacent the outwardly protruding corner 48 and disposed at a second side 58 of the case 6. It can be seen that the outwardly protruding corner 48 and the second corner 84 are asymmetric with respect to the main axis 44. The first side 52 is disposed in a first direction 56 from the main axis 44, and the second side 58 is disposed in a second direction 60 from the main axis 44.

The audio transducer 36 is disposed substantially at the outwardly protruding corner 48. Such positioning of the audio transducer 36 facilitates use of the handheld electronic device 4 by a user and additionally makes such use relatively more comfortable when compared with other devices having earphones generally centrally disposed at an upper edge of a symmetric case. That is, the outwardly protruding corner 48 can be received in an inner region of the user's outer ear. This allows a user to rapidly locate the audio transducer 36 on the ear at a location where the user will be able to hear output from the audio transducer 36. Additionally, such positioning avoids the case 6 being disposed entirely on an outer region of the outer ear, thus making such use relatively more comfortable.

The outwardly protruding corner 48 can be said to have an apex 64 that is at least partially rounded, and to further include a first leg 68 and a second leg 72 extending away from the apex 64. The first leg 68 can be said to lie generally along a first axis 74 extending from the apex 64, and the second leg 72 can be said to lie generally along a second axis 76 extending from the apex 64. While it can be seen that the first leg 68 and the second leg 72 are not straight, and rather are at least slightly curved, the elongation of the first leg 68 lies generally along the first axis 74, and the elongation of the second leg 72 lies generally along the second axis 76.

It can be seen that the exemplary first axis 74 and second axis 76 are oriented at a first angle 80 with respect to one another. The exemplary first angle 80 is an acute angle, meaning that the angle is less than 90 °. The relative sharpness of the outwardly protruding corner 48 facilitates the outwardly protruding corner 48 being readily positioned at the inner region of the outer ear, and makes use of the handheld electronic device 4 relatively comfortable. The first angle 80 can be up to about 90 ° while still providing the benefits described herein, although other configurations of the outwardly protruding corner 48 can be provided while still being within the scope of the invention.

The second corner 84 can be said to include an at least partially rounded apex 88 and to have the second leg 72 and a third leg 92 extending away from the apex 88. The third leg 92 is elongated and is disposed generally along a third axis 94. The second axis 76 and third axis 94 are oriented at a second angle 96 with respect to one another. In the present exemplary embodiment, the second angle 96 is an obtuse angle, meaning that the angle in excess of 90 °.

A comparison between the outwardly protruding corner 48 and the second corner 84 illustrates the aforementioned asymmetry in the case 6. It can be seen that the second leg 72, which extends generally between the apex 64 of outwardly protruding corner 48 and the apex 88 of the second corner 84, is oriented oblique to the main axis 44. As employed herein the expression "ob lique" and variations thereof shall refer generally to a relationship that is either perpendicular nor parallel. More specifically, it can be seen that the second leg 72 is disposed with respect to the main axis 44 such that every tangent along second leg 72 is oriented oblique to the main axis 44. Such a relationship further illustrates the asymmetry between the outwardly protruding corner 48 and the second corner 84, and the general asymmetry of the case 6 itself.

The audio transducer 36 can be seen to be offset in the first direction 56 from the main axis 44. That is, the main axis 44 does not lie over precisely the center of the audio transducer 36. In the present example, the main axis 44 does not overlie any portion of the audio transducer 36. However, in other embodiments of the invention, the main axis 44 could still overlie at least a portion of the audio transducer 36 with the audio transducer 36 still being offset from the main axis 44.

It thus can be seen that the asymmetry of the case 6 and the positioning of the audio transducer 36 at an outwardly protruding corner 48 at a location offset from the central axis 44 allows the user to more readily locate the audio transducer 36 with respect to the user's ear, and also allows the user to use the handheld electronic device 4 with a greater degree of comfort. Such ease of use and comfort desirably encourages use by the user.

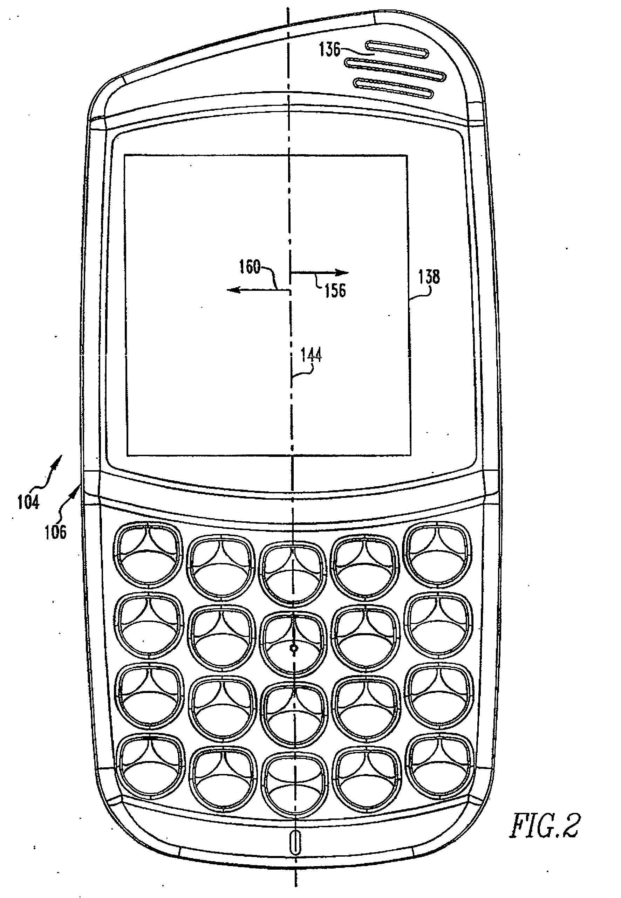

A second embodiment of handheld electronic device 104 is depicted generally in Fig. 2. The handheld electronic device 104 is similar to the handheld electronic device 4 in that it includes the same asymmetric case as the handheld electronic device 4. The audio transducer 136 is similarly offset in a first direction 156 from the main axis 144. However, the display 138 of the handheld electronic device 104 is offset in a second direction 160 from the main axis 144, it being noted that the main axis 144 still overlies a portion of the offset display 138. As such, the audio transducer 136 and the display 138 are, in the present depicted exemplary embodiment, each offset in opposite directions from the main axis 144. Such opposite offsetting can provide to the handheld electronic device 104 an aspect of symmetry which may at least partially counteract perception of the asymmetric configuration of its case 106.
In another embodiment, there is provided a handheld electronic device comprising:
a case having a front surface;
an input apparatus; and
an output apparatus comprising an audio transducer and a display disposed on the case;
the input apparatus comprising a keypad having a plurality of keys arranged on the front surface of the case in a number of rows and columns with respect to a main axis of the case, the main axis being disposed generally centrally on the case, extending across the display, and being one of:
   disposed substantially centrally along a column of keys; and
   disposed substantially between two adjacent columns of keys;
the case being formed to have an outwardly protruding corner at a first side of the main axis that provides to the case an asymmetry with respect to the main axis.
Optionally, the audio transducer is disposed on the outwardly protruding corner at a location offset from the main axis in a direction toward the first side.
Optionally, the protruding corner comprises an at least partially rounded apex, an elongated first leg, and an elongated second leg, the first leg being oriented generally oblique to the main axis.
Optionally, the first leg and the second leg extend from the apex along a first axis and a second axis, respectively, oriented at most at about ninety degrees with respect to one another.
Optionally, the first axis and the second axis are oriented at an acute angle with respect to one another.
Optionally, the protruding corner protrudes away from the display in a direction generally parallel with the main axis.
Optionally, the case is formed to have a second corner adjacent the outwardly protruding corner and disposed at a second side of the main axis, the second corner having an at least partially rounded apex, the second leg extending generally between the apex of the outwardly protruding corner and the apex of the second corner, substantially all tangents to the second leg being oriented oblique to the main axis.
Optionally, the second corner includes a third leg extending from the apex thereof, the third leg extending along a third axis, the second axis and the third axis being oriented at an obtuse angle with respect to one another.
Optionally, the display is offset from the main axis in a direction away from the first side.
While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A handheld electronic device (4) comprising:
a case (6) having a front surface (40):
an input apparatus (8); and
an output apparatus (12) comprising an audio transducer (36) and a display (38) disposed on the case (6):
the input apparatus (8) comprising a keypad (20) having a plurality of keys (24) arranged on the front surface (40) of the case (6) in a number of rows (28) and columns (32) with respect to a main axis (44) of the case (6), the main axis (44) being disposed generally centrally on the case (6), extending across the display (38), and being one of:
disposed substantially centrally along a column (32) of keys (24); and
disposed substantially between two adjacent columns (32) of keys (24);
the case (6) being formed to have an outwardly protruding corner (48) at a first side (52) of the main axis (44); wherein the protruding corner (48) comprises an at least partially rounded apex (64), an elongated first leg (68), and an elongated second leg (72), the first leg (68) being oriented generally oblique to the main axis (44), and
the case (6) being formed to have a second corner (84) adjacent the outwardly protruding corner (48) and disposed at a second side (58) of the main axis (44), the second leg (72) extending generally between the apex (64) of the outwardly protruding corner (48) and the apex (88) of the second corner (84), substantially all tangents to the second leg (72) being oriented oblique to the main axis (44),
wherein the case (6) generally is symmetric about the main axis (44) except for the outwardly protruding corner (48) and the second corner (84) being asymmetric with respect to the main axis (44).

2. The handheld electronic device (4) of Claim 1 wherein the audio transducer (36) is disposed on the outwardly protruding corner (48) at a location offset from the main axis (44) in a direction toward the first side (52).

3. The handheld electronic device of Claim 1 wherein the first leg (68) and the second leg (72) extend from the apex (64) along a first axis (74) and a second axis (76), respectively, oriented at most at about ninety degrees with respect to one another.

4. The handheld electronic device of Claim 3 wherein the first axis (74) and the second axis (76) are oriented at an acute angle with respect to one another.

5. The handheld electronic device (4) of Claim 1 wherein the protruding corner (48) protrudes away from the display (38) in a direction generally parallel with the main axis (44); or
wherein the second corner (84) comprises an at least partially rounded apex (88); or
wherein the second corner (84) includes a third leg (92) extending from the apex (88) thereof, the third leg (92) extending along a third axis (94), the second axis (76) and the third axis (94) being oriented at an obtuse angle with respect to one another.

6. The handheld electronic device (4) of Claim I wherein the display (38) is offset from the main axis (44) in a direction away from the first side (52).

7. The handheld electronic device (4) of Claim I wherein the audio transducer (36) is indicated by a grille being formed in the front surface (40) of the case (6) at a location offset from the main axis (44) in a direction toward the first side (52),

## Patentansprüche

1. Tragbare bzw. handgehaltene elektronische Vorrichtung (4), die aufweist:
ein Gehäuse (6) mit einer Vorderseite (40);
eine Eingabevorrichtung (8); und
eine Ausgabevorrichtung (12), die einen Audio-Transducer (36) und eine Anzeige (38) aufweist, die an dem Gehäuse (6) angeordnet ist;
wobei die Eingabevorrichtung (8) eine Tastatur (20) aufweist, die eine Vielzahl von Tasten (24) angeordnet an der Vorderseite (40) des Gehäuses (6) in einer Anzahl von Zeilen (28) und Spalten (32) in Bezug auf eine Hauptachse (44) des Gehäuses (6) hat, wobei die Hauptachse (44) im Allgemeinen mittig an dem Gehäuse (6) angeordnet ist, sich über die Anzeige (38) erstreckt und eines ist aus:
angeordnet im Wesentlichen mittig entlang einer Spalte (32) der Tasten (24); und
angeordnet im Wesentlichen zwischen zwei angrenzenden Spalten (32) der Tasten (24);
wobei das Gehäuse (6) ausgebildet ist, eine nach außen vorstehende Ecke (48) an einer ersten Seite (52) der Hauptachse (44) zu haben; wobei die vorstehende Ecke (48) eine zumindest teilweise abgerundete Spitze (64), einen länglichen ersten Abschnitt (68) und einen länglichen zweiten Abschnitt (72) aufweist, wobei der erste Abschnitt (68) im Allgemeinen schräg zu der Hauptachse (44) orientiert ist, und
das Gehäuse (6) ausgebildet ist, eine zweite Ecke (84) angrenzend an die nach außen vorstehende Ecke (48) zu haben und an einer zweiten Seite (58) der Hauptachse (44) angeordnet, wobei sich der zweite Abschnitt (72) im Allgemeinen zwischen der Spitze (64) der nach außen vorstehende Ecke (48) und der Spitze (88) der zweiten Ecke (84) erstreckt, wobei im Wesentlichen alle Tangenten zu dem zweiten Abschnitt (72) schräg zu der Hauptachse (44) orientiert sind,
wobei das Gehäuse (6) im Allgemeinen symmetrisch zu der Hauptachse (44) ist, außer dass die nach außen vorstehende Ecke (48) und die zweite Ecke (84) in Bezug auf die Hauptachse (44) asymmetrisch sind.

2. Tragbare bzw. handgehaltene elektronische Vorrichtung (4) gemäß Anspruch 1, wobei der Audio-Transducer (36) an der nach außen vorstehenden Ecke (48) an einer Position angeordnet ist, die von der Hauptachse (44) in eine Richtung zu der ersten Seite (52) hin verschoben ist.

3. Tragbare bzw. handgehaltene elektronische Vorrichtung gemäß Anspruch 1, wobei sich der erste Abschnitt (68) und der zweite Abschnitt (72) von der Spitze (64) jeweils entlang einer ersten Achse (74) und einer zweiten Achse (76) erstrecken, orientiert höchstens ungefähr neunzig Grad zueinander.

4. Tragbare bzw. handgehaltene elektronische Vorrichtung gemäß Anspruch 3, wobei die erste Achse (74) und die zweite Achse (76) in einem spitzwinkligen Winkel zueinander orientiert sind.

5. Tragbare bzw. handgehaltene elektronische Vorrichtung (4) gemäß Anspruch 1, wobei die vorstehende Ecke (48) weg von der Anzeige (38) in eine Richtung im Allgemeinen parallel zu der Hauptachse (44) vorsteht; oder
wobei die zweite Ecke (84) eine zumindest teilweise abgerundete Spitze (88) aufweist; oder
wobei die zweite Ecke (84) einen dritten Abschnitt (92) umfasst, der sich von deren Spitze (88) erstreckt, wobei sich der dritte Abschnitt (92) entlang einer dritten Achse (94) erstreckt, wobei die zweite Achse (76) und die dritte Achse (94) in einem stumpfen Winkel zueinander orientiert sind.

6. Tragbare bzw. handgehaltene elektronische Vorrichtung (4) gemäß Anspruch 1, wobei die Anzeige (38) von der Hauptachse (44) in eine Richtung weg von der ersten Seite (52) versetzt ist.

7. Tragbare bzw. handgehaltene elektronische Vorrichtung (4) gemäß Anspruch 1, wobei der Audio-Transducer (36) durch ein Gitter angezeigt wird, das in der Vorderseite (40) des Gehäuses (6) an einer Position ausgebildet ist, die von der Hauptachse (44) in eine Richtung zu der ersten Seite (52) hin versetzt ist.

## Revendications

1. Dispositif électronique portable (4) comprenant :
un boîtier (6) ayant une surface avant (40) ;
un appareil d'entrée (8) ; et
un appareil de sortie (12) comprenant un transducteur audio (36) et un afficheur (38) disposé sur un boîtier (6) ;
l'appareil d'entrée (8) comprenant un clavier (20) ayant une pluralité de touches (24) agencées sur la surface avant (40) du boîtier (6) dans un certain nombre de rangées (28) et de colonnes (32) par rapport à un axe principal (44) du boîtier (6), l'axe principal (44) étant disposé globalement de façon centrale sur le boîtier (6), et s'étendant à travers l'afficheur (38), et étant soit :
sensiblement disposé de façon centrale le long d'une colonne (32) de touches (24) ; soit
sensiblement disposé entre deux colonnes adjacentes (32) de touches (24) ;
le boîtier (6) étant formé de façon à avoir un angle faisant saillie vers l'extérieur (48) d'un premier côté (52) de l'axe principal (44) ; l'angle faisant saillie (48) comprenant un sommet au moins partiellement arrondi (64), un premier côté allongé (68) et un second côté allongé (72), le premier côté (68) étant orienté de façon globalement oblique par rapport à l'axe principal (44), et
le boîtier (6) étant formé de façon à avoir un second angle (84) adjacent à l'angle faisant saillie vers l'extérieur (48) et disposé d'un second côté (58) de l'axe principal (44), le second côté (72) s'étendant globalement entre le sommet (64) de l'angle faisant saillie vers l'extérieur (48) et le sommet (88) du second angle (84), sensiblement toutes les tangentes au second côté (72) étant orientées de façon globalement oblique par rapport à l'axe principal (44),
dans lequel le boîtier (6) est sensiblement symétrique par rapport à l'axe principal (44), excepté en ce qui concerne l'angle faisant saillie vers l'extérieur (48) et le second angle (84) qui sont asymétriques par rapport à l'axe principal (44).

2. Dispositif électronique portable (4) selon la revendication 1, dans lequel le transducteur audio (36) est disposé sur l'angle faisant saillie vers l'extérieur (48) en un point décalé par rapport à l'axe principal (44) vers le premier côté (52).

3. Dispositif électronique portable selon la revendication 1, dans lequel le premier côté (68) et le second côté (72) partent respectivement du sommet (64) le long d'un premier axe (74) et d'un second axe (76) orientés à au plus environ quatre-vingt-dix degrés l'un par rapport à l'autre.

4. Dispositif électronique portable selon la revendication 3, dans lequel le premier axe (74) et le second axe (76) sont orientés en formant un angle aigu l'un par rapport à l'autre.

5. Dispositif électronique portable (4) selon la revendication 1, dans lequel l'angle faisant saillie (48) fait saillie par rapport à l'afficheur (38) dans une direction globalement parallèle à l'axe principal (44) ; ou
dans lequel le second angle (84) comprend un sommet au moins partiellement arrondi (88) ; ou
dans lequel le second angle (84) comporte un troisième côté (92) partant du sommet (88) de celui-ci, le troisième côté (92) s'étendant le long d'un troisième axe (94), le second axe (76) et le troisième axe (94) étant orientés en formant un angle obtus l'un par rapport à l'autre.

6. Dispositif électronique portable (4) selon la revendication 1, dans lequel l'afficheur (38) est décalé par rapport à l'axe principal (44) dans une direction s'éloignant du premier côté (52).

7. Dispositif électronique portable (4) selon la revendication 1, dans lequel le transducteur audio (36) est indiqué par une grille qui est formée dans la surface avant (40) du boîtier (6) à une position décalée par rapport à l'axe principal (44) dans une direction orientée vers le premier côté (52).
